# EUROPEAN PATENT SPECIFICATION

(11) **EP 1 312 209 B1**
(45) Date of publication and mention of the grant of the patent: **08.03.2017**
(21) Application number: 01968190.7
(22) Date of filing: 27.08.2001
(51) Int. Cl.: G07C 9/00, H04B 1/20, H04N 5/44, H04N 7/088, H04N 21/41, H04N 21/422, H04N 21/441, H04N 21/442, H04N 21/45, H04N 21/454, H04N 21/47, H04N 21/84, H04N 5/445

(54) **PERSONALIZED REMOTE CONTROL**
INDIVIDUELL ANGEPASSTE FERNBEDIENUNG
TELECOMMANDE PERSONNALISEE

(30) Priority: 25.08.2000 US 227916 P; 25.08.2000 US 227890 P; 27.08.2001 US 941148
(43) Date of publication of application: 21.05.2003
(73) Proprietor: OpenTV, Inc., San Francisco, CA 94111 (US)
(72) Inventor: HUBER, Thomas, Parker, CO 80134 (US); MARKEL, Steven, O., Highlands Ranch, CO 80126 (US); ZENONI, Ian, Highlands Ranch, CO 80126 (US); LEMMONS, Thomas, Evergreen, CO 80439 (US)
(74) Representative: Leman Consulting S.A.
(86) International application number: PCT/US2001/026801
(87) International publication number: WO 2002/017627

(56) References cited:
- WO-A1-01/50752
- WO-A1-99/31881
- US-A- 5 758 257
- US-A- 5 818 510
- US-A- 5 861 881
- US-A- 6 020 882

## Description

### Background of the Invention

### A Field of the Invention

The present invention pertains generally to display technology and more specifically to remote control devices that are operable with displays.

### B. Description of the Background

A wide variety of video content is currently available over regular broadcast television, cable TV, and satellite TV. Some of the content is clearly not suitable for viewing by younger viewers as it may contain adult content, adult language, violence, nudity, etc. Broadcasters and content providers have more recently been providing rating information on many programs that describes the content of the programs. For example, many movies that are displayed have an initial opening segment that provides the rating information such as the standard rating of G, PG, PG-14, R, and MA. Further, more detailed rating information maybe provided such as whether the program includes adult language, violence, adult content, nudity, semi-nudity, and other detailed rating information.

Current devices for restricting viewing by younger viewers are somewhat limited. Various methods of restricting viewing access from a television receiver have been proposed (e.g., US Patent 5,382,983 issued to Kwoh et al.) Set-top boxes (STBs) can also be programmable to restrict access to certain programming based upon the content rating of the program. The user can program the STB to only access certain programs that meet the program preference information that has been programmed by the user. For example, US Patent 4,718,107 issued to Hayes, discloses parental control provided in an addressable Cable Television (CATV) converter or STB. This patent discloses the basic idea of an access code to limit viewing. If this code is forgotten, the STB has to be taken to the CATV provider to have the memory purged of the block-out information and access code, and a new access code must then be entered. In another example, hotels may restrict access to adult movies if requested by the hotel guest. US Patent 6,163,272 issued to Goode et al, discloses assigning personal identification numbers to set top terminals within an interactive video on-demand system. Further, it is believed that personalized remote control devices have been constructed by companies such as AT&T that restrict access to certain channels. For example, if a certain channel typically displays R-rated or MA-rated movies, the user may restrict access to those channels on a personalized remote control device.

US Patent 5,663,756 issued to Blahut et al discloses the remote control unit that restricts access to certain programs. The remote control unit is identified by a bit code that is transmitted along with the standard remote function code. This identification code also alerts the display system that the remote control unit being used has restricted access to certain programs. Each of the remote units stores respective representations, corresponding to different sets of access capabilities under which the remote control device may operate. The concept behind such a personalized remote control device is that the younger viewer will only have access to and be able to use a personalized remote control device that will allow that viewer to access only those programs the adult wishes the viewer to access, (e.g., cartoons or Disney programming, etc.) Whereas Blahut et al may detail the ability of a receiver to recognize a specific remote control unit, Blahut et al specifies a different remote control unit for each variation of access capability. Again, the system simply chooses programs that are known to contain content that may be suitable for the viewer. This may be severely limiting since most programs are not rated.

Another problem with many of these types of systems is that such systems are not available for automated use by multiple users. For example, as currently configured, a user must insert an ID code to program the set-top box to restrict program content and subsequently use an ID code to unlock the set-top box. Further, the program guide may still display all of the programming information including the programming that has been blocked. Hence, children have access to and know what they are not allowed to view. An additional drawback of current methods of limiting television content is the inability of current methods to tailor subject matter specifically to the viewer. In this area, current devices are constrained to preprogrammed restrictions and not to any derived data, such as preference or profile data relating to the user of a personal remote control device.

US Patent 5,973,683 issued to Cragun et al, discloses a method for controlling content in response to a viewer's profile. There is no disclosure in Cragun, however, of the use of any type of remote control device.

US 6,020,882 discloses a television access control system intended for controlling access to television programs in which a classification code is transmitted with the video signal. In this system, an authorized user or administrator sets rights depending on the day and the hour during the day, these rights being associated with a rating. Once the rights have been set by the administrator, current users can use the arrangement of the invention. In use, when a user intends to access to TV content, he/she uses a standard remote control to select the channel and/or content. A control signal is sent from the remote control to the TV set, in a conventional way. Once the control signal is received, the access control system located in the STB checks if the rights set by the authorized user allow for access to the content to be granted. If this is the case, the access is authorized and the content is displayed. Access is denied if the rights do not allow for this content to be accessed at the current time.

In this invention, the rights are not linked to a specific user, but are the same for all the users, as current users are not identified. This implies that all the users have to follow the same rules even users who could be allowed to access any content at any time. The remote control used in this invention is a pass through device and the checking of the rights is made by the STB.

WO 01/50752 overcomes a drawback of US 6,020,882, which is that all the users are bound to the same rights and that changing the rights can be quite difficult. In WO 01/50752, it is possible for an administrator, to add "exceptions" to the stored rules. The exceptions are stored in a memory of the TV set, so that the administrator can easily access to the exception if he/she wants to re-use a same exception.

In WO 01/50752, only the administrator can add an exception and access the rights. The administrator has to be authenticated prior to setting rules or exceptions. The current users are not identified. The authentication of the administrator is also made in the STB.

WO 99/31881 applies in a TV system wherein a video signal is transmitted with a rating and in which a rating associated with a user profile is compared to the rating of the video signal prior to granting or denying access to the video signal. In this system, checking the profile and comparing it to the rating of the signal requires time. During this time, a user can access the content. By continuously zapping from a non authorized channel to an authorized channel and back to the non authorized channel, a user could access a non authorized content. The invention of WO 99/31881 prevents a user from accessing a non authorized content by using this zapping.

In this invention, sequences of signal channel selection are monitored. If a suspect sequence is detected, such as continuously returning to the same channel, the display is blocked until the processing of the authorization is successfully ended.

This document does not mention if and how the current users are identified. Moreover, checking the rights is done in the STB. The remote control device is only used to send commands to the STB.

It would therefore be desirable to provide a system that is capable of being employed by multiple users in an automated fashion and would allow the use of one or more remote control devices to automatically access programming and/or enhanced programming which is specifically tailored to the viewer. It would also be desirable to provide a system whereby this tailoring of programming and/or enhanced information to the viewer is accomplished by having video segments automatically selected for the viewer based upon preference and/or profile data of the user of a remote control device.

### Summary of the Invention

The present invention overcomes the disadvantages and limitations of the prior art by providing remote control devices that interact with an STB to provide selective programming and/or enhanced content based upon the identity of the user of a personal remote control. The present invention can also select or exclude video or enhanced content based upon tags that describe video content and the identity of the user based upon the use of a personalized remote control. The present invention can employ recognition techniques, such as word recognition, image recognition and sound recognition to restrict or select video content based upon the identity of the user of a personalized remote control device.

The present invention may therefore comprise a method of controlling displayed video and data content utilizing a remote control device that interacts with a set-top box to provide content based upon the identity of the current user of said remote control comprising : establishing an identification of the current user by receiving recognition data of the current user in the remote control device; checking in said remote control device whether the recognition data is valid; if said recognition data is valid, determining and storing a current user ID, related to the received recognition data, in a memory of the remote control device; if said recognition data is not valid, storing a default user ID in said memory of the remote control device; generating by said remote control an output signal combining said user ID and a command sequence to said set-top box, communicating said output signal to said set-top box, assigning preference and profile data corresponding to said current user to a current user database within the set-top box, controlling an output of said set-top box by controlling video content based on said preference and profile data within said current user database.

The present invention may also comprise a system for controlling displayed video and data content utilizing a personalized remote control device that interacts with a set-top box to provide content based upon the identity of the current user of said remote control comprising an ID input device within said remote to determine the identity of the current user, said remote control device comprising means for checking whether recognition data entered by said ID input device is valid or not and means for determining and storing a user ID, related to the received recognition data, in a memory of the remote control, said user ID depending on whether the recognition data is valid or not; a communication link between the personalized remote control and the set-top box for transmission of an output signal combining said user ID and a command sequence to said set-top box, the set-top box assigning preference and profile data corresponding to the current user to a current user database within the set-top box, and controlling an output by controlling said video content.

The present invention offers advantages over the prior art by providing a method and system to customize and tailor video content to an individual. It accomplishes this in a manner that is simple and nearly seamless to the user. It may provide effective and thorough maintenance of restricted access to younger viewers while at the same time providing additional choices and content to the unrestricted user. This is all performed in a method that requires minimal effort on the part of the user. The invention has the further advantages of operating automatically by utilizing automated recognition or tag information. The invention does not rely on generalized preprogrammed ratings, and can work in real time, based upon recognition of key words, images, sounds, *etc.* The invention can incorporate a wide range of customization through the use of user preference and/or profile data.

### Brief Description of the Drawings

Figure 1 is a schematic illustration of the environment in which the present invention may be used.
Figure 2 is a schematic diagram of the manner in which the present invention can be implemented with multiple personalized remote control devices.
Figure 3 is a schematic block diagram of the manner in which the present invention can be implemented using a single remote control device using keyed input ID codes.
Figure 4 is a flow chart illustrating the functions performed by the devices illustrated in block diagram of Figure 3.
Figure 5 is a schematic block diagram illustrating the manner in which another embodiment of the present invention can be implemented using an automated identification input.
Figure 6 is a flow diagram illustrating the functions performed by the schematic block diagram of Figure 5.
Figure 7 is a schematic block diagram illustrating another manner of implementing the present invention incorporating iSelect video.
Figure 8 is a schematic block diagram illustrating the manner in which video is selected in accordance with Figure 7.
Figure 9 is a flow chart of the functions that may be performed by a set-top box to implement the various embodiments of the present invention.
Figure 10 is a schematic block diagram illustrating an example of a typical user preference/profile database as might be used in the present invention.
Figure 11 is a continuation of Figure 10 where a schematic block diagram illustrating an example of a typical user preference/profile database as might be used in the present invention.

### Detailed Description of the Preferred Embodiment of the Invention

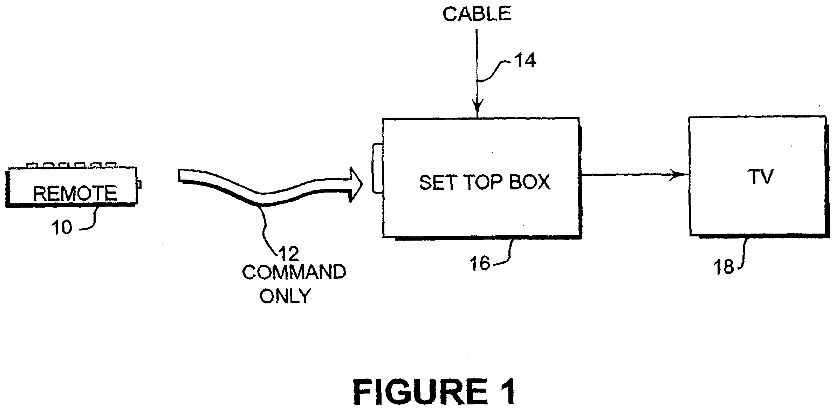

Figure 1 discloses a typical cable TV system in which the present invention may be employed. A remote control device 10 generates command signals 12 that are transmitted to a set-top box 16 to control the operation of the set-top box 16. The programming information is provided on cable 14. The programming information can be video information or data that is provided from the head-end. The user operates the keypad of the remote control device 10 to generate the command signals 12 which operate the set-top box 14 to select video which is displayed on the TV 18 or other display devices. Various other functions can also be performed using the remote control 10.

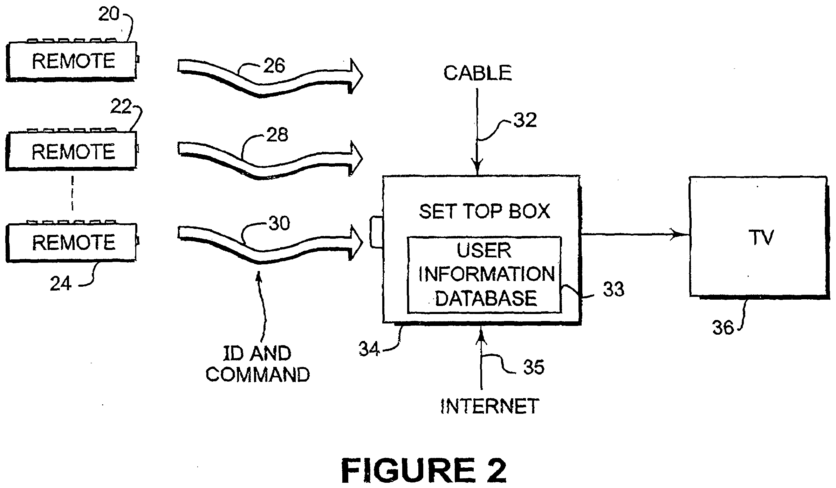

Figure 2 is a schematic illustration of the manner in which the present invention may be implemented using multiple personalized remotes 20, 22, and 24. Each of the remote control devices generates an output signal 26, 28, and 30, respectively, that constitute both an identification sequence code and a command sequence. The identification sequence code is an ID code that is generated by each of the personalized remotes 20, 22, and 24 and is appended to the various commands that are generated by the user by pressing the buttons on the remote control device. The set-top box 34 is programmed to read the ID codes for each personalized remote to facilitate the recognition of the current user and to access an information database 38 that consists of profiles and preferences for each user of the system. The STB then can enhance and/or restrict the displayed content based on the user profiles and preferences that correspond to the personalized remote 20, 22 or 24. Each of the personalized remotes 20, 22, and 24 are initially programmed with user preference data and a password to either enhance and/or restrict video programming, or other content information including data, based upon the standard manner in which set-top boxes are currently programmed. Hence, a child may have their own remote control which only displays children's programming (content information) and only provides information relating to children's programming (content information) on the program guide.

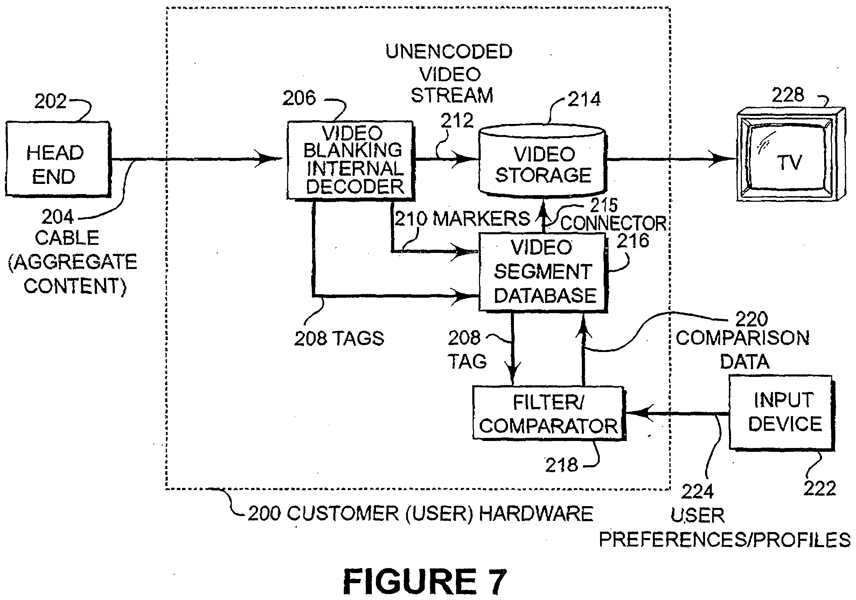

The manner in which the personalized remote illustrated in Figure 2 interacts with the set-top box 34 to provide the selective programming is more fully described with reference to Figure 7 below.

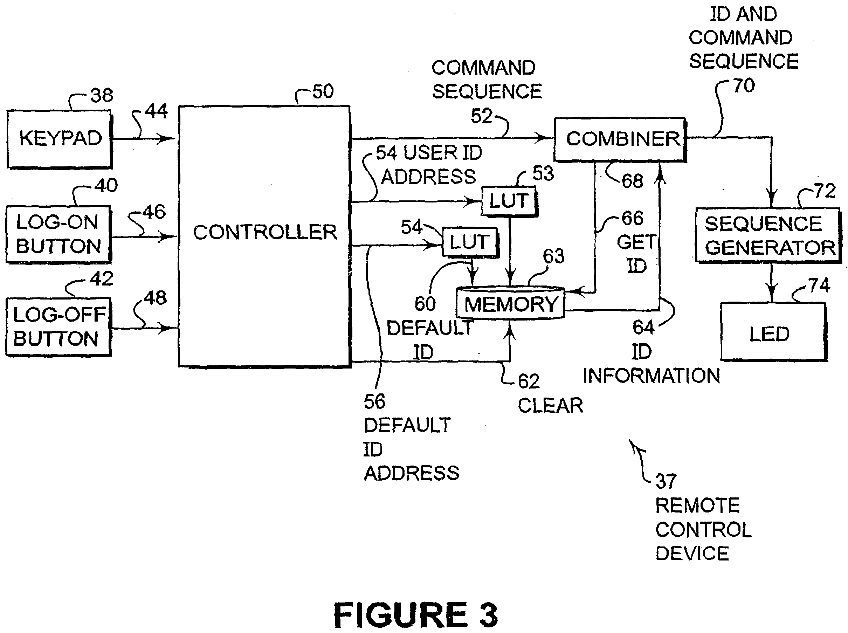

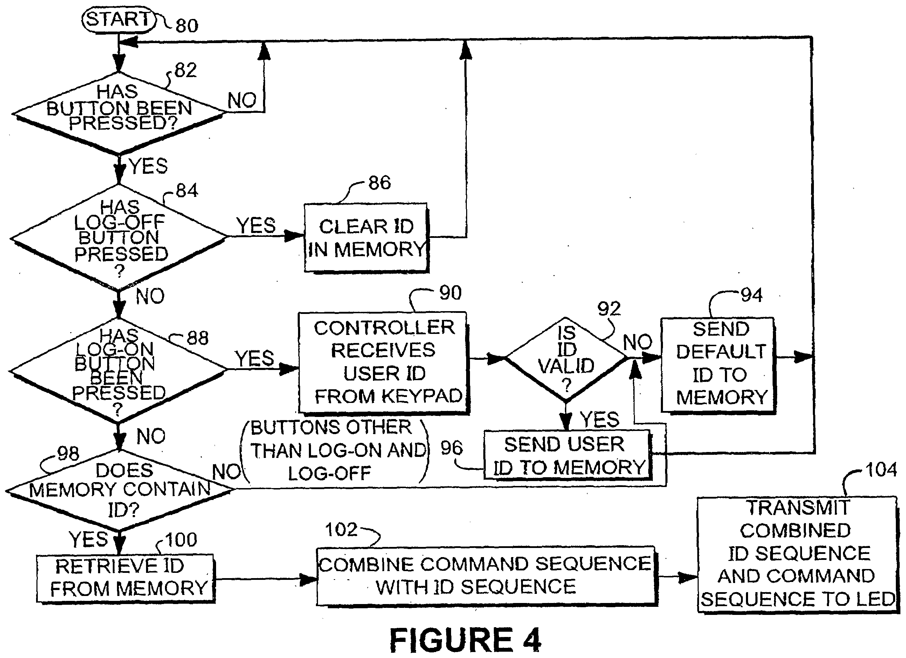

Figure 3 is a schematic block diagram of one embodiment of the present invention that utilizes a single remote control for programming by multiple users. As shown in Figure 3, the remote control device 37 includes a keypad 38, a log-on button 40, and a log-off button 42. The keypad 38 generates the keypad signals which are sent to the controller 50. Similarly, the log-on button generates a log-on signal 46 that is sent to controller 50. Log-off button 42 generates a log-off control signal 48 that is also sent to the controller 50. The controller 50 may form a portion of a microprocessor or other logic control device or state machine, as desired. The various functions performed by the controller 50 are more fully disclosed in Figure 4. The controller 50 generates a command sequence signal 52 as well as a user ID address 54, a default ID address 56, and a clear signal 62. The command sequence signals 52 are representative of the information that has been entered by the user in the keypad 38. Similarly, the user ID address is an address signal that is generated in response to entry of an ID code and keypad 58 after the log-on button 40 has been activated. The log-off button 42 ends any of the sequences that have been generated by the controller 50 and causes the controller 50 to generate the clear signal 62 which clears the memory 63. The user ID address 54 is transmitted to a look-up table (LUT) 53 that generates a user ID 58 that is subsequently stored in memory 63. Alternatively, the default user address 56 is applied to a look-up table (LUT) 54 that generates a default ID 60 that is stored in memory 63. The clear signal 62 empties the memory 63 so that it does not contain an ID.

As shown in Figure 3, the command sequence 52 that is generated at the output of controller 50 is sent to a combiner 68 that combines the command sequence 52 with the ID information 64. Upon receiving a command sequence 52, the combiner 68 generates a signal 66 to retrieve the ID information from the memory 63. The ID information 64 is then transmitted to the combiner 68 which in turn generates a combined ID sequence and command sequence 70. The combined ID sequence and command sequence signal 70 is applied to a sequence generator 72 that generates the control pulses to illuminate the light emitting diode 74. The output from LED 74 is then transmitted to the set-top box receiver.

Figure 4 is a schematic flow diagram illustrating the functions that are performed by the schematic block diagram illustrated in Figure 3. As shown in Figure 4, the process is started at step 80. At step 82, a determination is made as to whether any button has been pressed on the remote control device 37 (Figure 3). If no button has been pressed, the process returns to step 82. If a button has been pressed, it is then determined at step 84 if the log-off button has been pressed. If it has, any IDs that are stored in the memory are cleared at step 86. If the log-off button has not been pressed, the process proceeds to step 88. At step 88, it is determined whether the log-on button has been pressed. If the log-on button has been pressed, the controller receives the user ID from the keypad at step 90. It is then determined whether the user ID that has been entered in the keypad is a valid ID at step 92. If it is a valid ID, the user ID is sent to memory and stored in the memory, and the process returns to step 82. If the ID entered in the keypad is not a valid ID, a default ID is sent to the memory at step 94. The process then returns to step 82.

Returning to step 88 of Figure 4, if it has been determined at step 88 that the log-on button has not been pressed, this means that buttons other than the log-on and log-off buttons have been pressed, i.e., the keypad buttons 38 (Figure 3). The process then proceeds to step 98 to determine if the memory contains an ID. If the memory does not contain an ID, the process proceeds to step 94 to send a default ID to memory and then return to step 82. If it is determined that the memory does contain an ID at step 98, the ID is then retrieved from memory at step 100 and is combined with the command sequence at step 102. At step 104, the combined ID sequence and command sequence are transmitted to the LED.

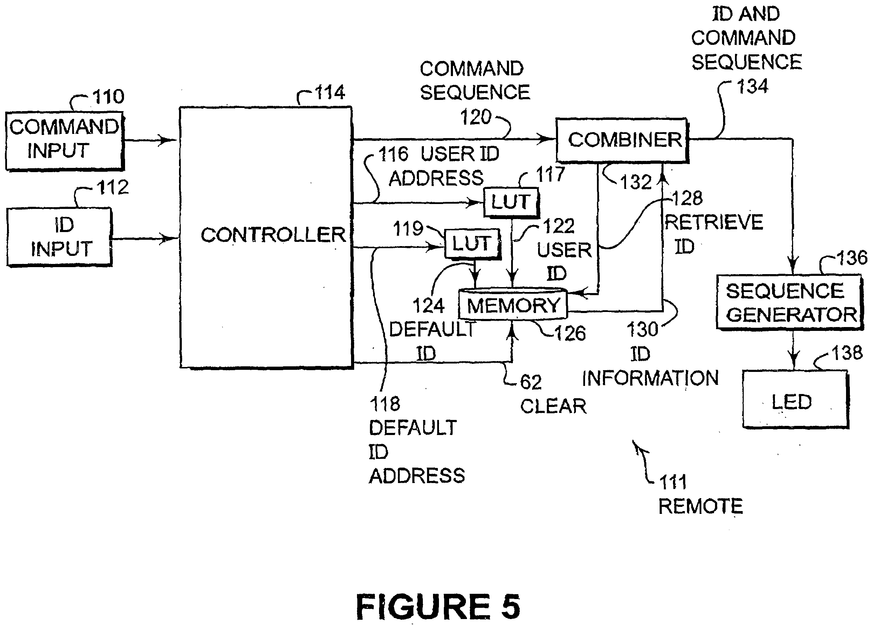

Figure 5 is a schematic block diagram of an alternative embodiment of the present invention. In accordance with this embodiment, an ID input device 112 is used rather than log-in and log-off buttons. The ID input 112 can comprise any number of different types of input. The user ID can be based on physical attributes of the user, such as a fingerprint scanner, a voice recognition circuit, a retinal scanning device, a snifter device, a device that recognizes faces, or any type of device that can identify a physical or anthropometric attribute of the user of the remote control device 111. The user ID can also be based on an intellectual attribute of the user, such as a password, a key code sequence or any other type of device that can identify the user of the remote control device 111 by a piece of information known to the user. In a similar fashion, the command input device 110 can be any type of desired command input such as a voice recognition circuit or similar input device that allows the user to input commands into the controller 114. The remaining portions of the block diagram of Figure 5 are similar to the schematic block diagram of Figure 3. Controller 114 generates command sequence signals 120 that are applied to combiner 132. Controller 114 also generates a user ID address 116 or a default ID address 118 that are applied, respectively, to look-up tables 117 and 119. The output of look-up table 117 is a user ID 122 that is stored in memory 126. Alternatively, the output of look-up table 119 is a default ID 124 that is stored in memory 126. A "retrieve ID" signal 128 is generated by the combiner 132 upon receiving command sequence signals 120. Memory 126 then downloads the ID information 130 to the combiner 132. The output of the combiner 132 is a combined ID sequence and command sequence signal 134 that is applied to a sequence generator 136. The sequence generator 136 generates a series of sequence control signals that control the LED 138.

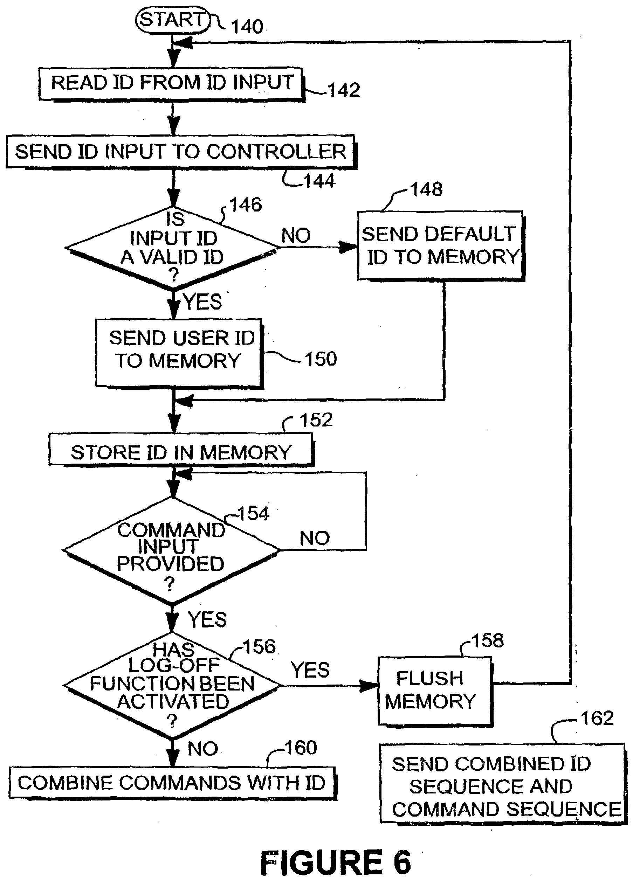

Figure 6 is a flow diagram of the operations that are performed by the block diagram illustrated in Figure 5. At step 140, the process is started. The ID from the ID input is read at step 142. Again, the ID can comprise, for example, a fingerprint input. At step 144, the ID input is transmitted to the controller 50. The controller 50 then compares the ID input with stored inputs and determines if the ID input is a valid input at step 146. If the ID input is not a valid ID, i.e., it is not an ID that is stored by the controller; the controller sends a default ID to memory.

The default ID of any of the embodiments of the present invention can comprise a standard preprogrammed default ID such as a default ID that restricts all programming except for G rated programming, for example. Alternatively, the default ID can be generated by the controller 50 by or-ing all of the restrictions in each of the profiles, from the multiple users that have stored profiles in the controller 50.

Returning to step 146 of Figure 6, if it is determined that the ID is a valid ID, the controller 50 sends the user ID to memory at step 150. At step 152, the memory stores either the user ID or the default ID in the memory 126. At step 154, it is then determined whether a command input button has been pressed. Alternatively, the process determines whether any type of command input has been provided through the command input 110 (Figure 5). If no command signal is present, the process returns to the beginning of step 154. If a command input has been provided, it is then determined if the log-off function has been activated at step 156.

Various different types of processes can be used to determine if the log-off function has been activated at step 156 of Figure 6. For example, it may be determined whether a certain amount of time (delta t) has expired since a command input has been received by controller 50, or if an ID input has been received by controller 50. Further, the log-off function may be provided by pressing a log-off button. Also, the log-off function may be activated by determining whether the set-top box or TV has been turned off by the remote control device. Further, the controller can check to see whether the ID input has ceased to provide an input. For example, the remote can be configured to continuously read a fingerprint input, or read a fingerprint input and detect whether the finger has been removed from the reading device. As soon as the finger or thumb is removed, the log-off function will be activated. Also, the various buttons of the remote can be configured to have fingerprint readers that read the user's fingerprint each time a button is pressed.

Returning to step 156 of Figure 6, if it has been determined that the log-off function has been activated, the memory is flushed, i.e. erased, at step 158 to remove any remaining IDs that are stored in the memory. The process then returns to step 142. If it is determined at step 156 that the log-off function has not been activated, the command sequence information and the ID sequence information are combined at step 160 by the combiner 132 (Figure 5). The combined ID sequence and command sequence are then sent to the sequence generator 136 (Figure 5) at step 162.

Figure 7 is a schematic diagram of another implementation of the present invention. As shown in Figure 7, the head-end 202 provides the aggregate content video over cable 204 to the customer (user) hardware 200 located at the user's site. The video data that is provided to the customer (user) hardware 200 is passed to a video blanking interval decoder 206 that strips off the tags 208 and markers 210 from the video stream and provides an unencoded video stream 212. The unencoded video stream 212 is then stored in a video storage device 214. The tags and markers 210 are applied to a video segment database 216 that generates a video pointer table 218. As explained below, the video pointer table 218 identifies the address at which the particular video segment is stored in the video storage 214. The tag information 208, is compared in a filter comparator 218 with user preferences/profiles 224 that are generated by an input device 222. The comparison data 220 is then sent back to the video segment database 216 and stored in a video pointer table (not shown). The data from the video pointer table is then sequentially read according to the pointer number, and the information is transferred via connector 215 to the video storage 214. Video segments identified in the video pointer table as being video that is OK to view are then read from the video storage device 214. The output of video storage device 214 consists of the video segments that have been authorized to be viewed by the viewer. These video segments are applied to the TV 228 for viewing by the viewer.

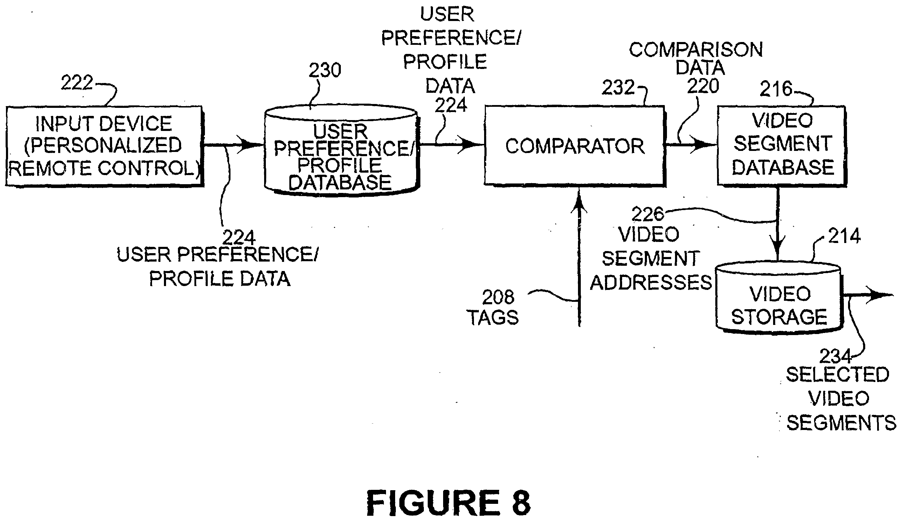

Figure 8 is a more detailed block diagram illustrating the manner in which video segments are selected in accordance with Figure 7. As illustrated in Figure 8 the user activates an input device 222 that can comprise an input device such as a personalized remote control, or other device for generating user preference/profile data 224. The user preference/profile data 224 is transferred to a user preference/profile database 230 that comprises a portion of the filter/comparator 218 (Figure 7). The user preference/profile data 224 is then applied to comparator 232, which is compared with the tags 208 to generate comparison data 220 that indicates whether the video segment is OK or not OK to view. This data is then sent to the video segment database 216 where it is stored in the video pointer table (not shown). The video pointer table is then read sequentially from the video segment database 216. Video segment addresses 226 correspond to video that is OK to be viewed or sent to the video storage 214. Video storage 214 sequentially reads the video segments at the indicated video segment addresses to generate a sequential series of selected video segments 234.

The present invention may also be implemented with US Provisional Application Serial Number 60/227,890 filed August 24, 2000 entitled "iSelect Video" by Ian Zenoni, Tom Lemons, Steve Market, and Steve Peliotis, which is specifically incorporated by reference for all that it discloses and teaches. This application discloses the manner in which tags can be attached to different video segments that are separated by markers. These tags can then be used by the set-top box in the same fashion as the service descriptors described in this application so that only particular video segments are selected or omitted from viewing, rather than entire programs

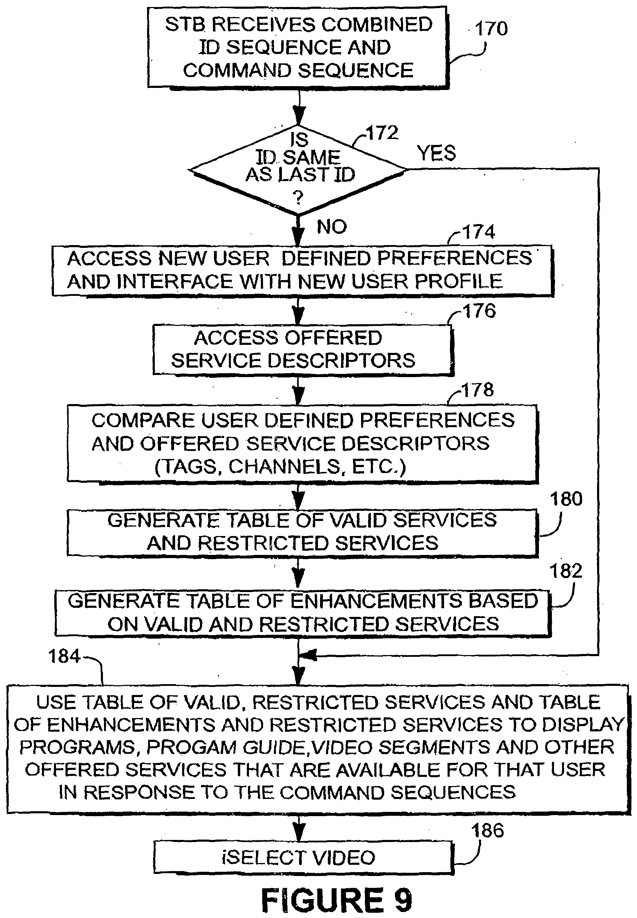

Figure 9 is a flow diagram of typical functions that may be performed by a set-top box. At step 170, the set-top box receives the combined ID sequence and command sequence. It is then determined by the set-top box at step 172 if the ID that is received is the same ID as the last ID that has been received. If it is the same, this process proceeds to step 184. If it is not-the same ID, a new user defined preference table is interfaced with the corresponding new user profile, and is accessed by the set-top box at step 174. The offered service descriptors are then accessed by the set-top box at step 176. The offered service descriptors may comprise rating information, tags, channel information, and other information that may relate to user preferences that describe the content of the services that are being offered. The user-defined preferences are then compared with the offered service descriptors at step 178. At step 180, a table is generated of the valid services and restricted services. In combination with this valid and restricted services table 180, a table of enhancements 182 is also generated to supplement viewing with enhanced or interactive content. The set-top box then uses the table of valid services and restricted services to display programs, the program guide, video segments, and other offered services that are available for that user in response to the command sequences for that ID 184. At step 186 iSelect video capabilities monitor the display information and react to key words, images, and sounds to filter or supplement content for the particular user.

In accordance with one embodiment of the present invention, the remote control unit may have the ability to interact with the user to identify the user of the device. This may be accomplished through pattern recognition techniques such as a key code input, a fingerprint reader, a retinal scanner, a voice recognition system or any other way that has the ability to establish and communicate the identity of its user to the STB.

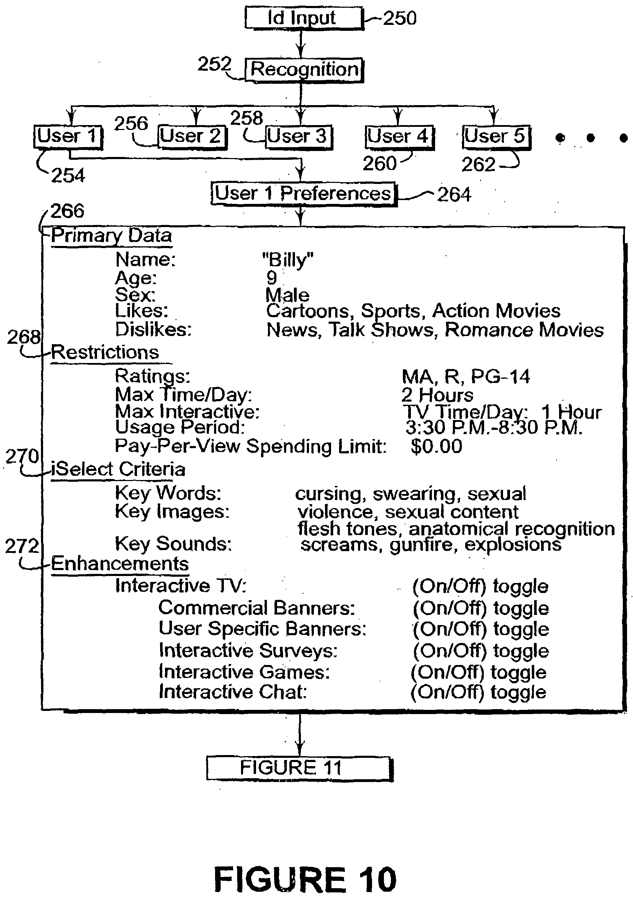

Figure 10 is a schematic block diagram illustrating an example of a typical user preference/profile database as might be used in the present invention. As illustrated in Figure 10, the ED of the current user is input 250 and recognized by a microprocessor 252 located within the STB. The recognition of the user, initiates the assignment of a user data file 254-262 and information corresponding to that user being loaded and labeled as the current user. The user preference data 264 may be information that is input by the user or user authority, and may describe information specific to the individual user. This preference data may include, but is not restricted to the following: primary data 266, restriction data 268, iSelect criteria 270, enhancements 272, or a variety of additional information that could be used to establish a complete summary of the individual user.

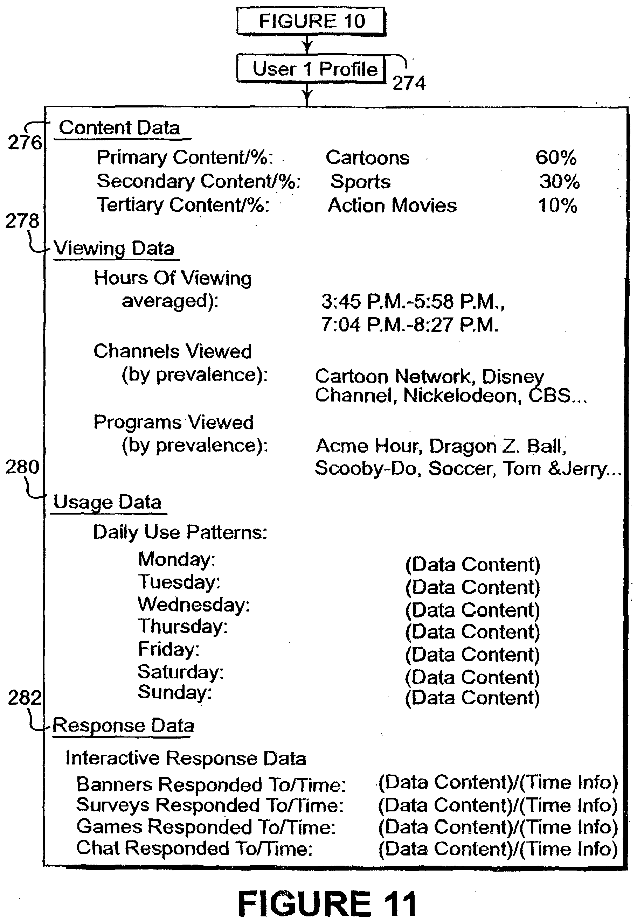

Figure 11 is a continuation of Figure 10 where a schematic block diagram illustrating an example of a typical user preference/profile database as might be used in the present invention. As illustrated in Figure 11, the database may also contain user profile data 274 which may comprise information that is empirically derived by the system. This profile data may be derived from the usage patterns of an individual and may include, but is not restricted to the following: content data 276, viewing data 278, usage data 280, response data 282, or a variety of additional information that could be used to establish a complete profile of the viewing habits of the individual user.

In accordance with one embodiment of the present invention, the enhancements to the video signal may be Interactive TV banners with the ability of the user to access enhanced content in areas that might be of interest. In accordance with one embodiment of the present invention, the restrictions to the video signal may be in the form of iSelect Video. In the iSelect video format, tags are embedded in the video streams that indicate the content of each video stream. The video stream may be pretagged or the tags can be created in real time by video recognition techniques utilizing key words (i.e., cursing, swearing, sexual language), key images (i.e., violence, sexual content flesh tones, anatomical recognition or key sounds (i.e. screams, gunfire, explosions). The tags are compared with the video preference information of the viewer, and a different channel or alternate video segments or a can be inserted and replace video segments that have been excluded. More specifically, the iSelect video may comprise a system for selecting and excluding video segments in a video stream to be viewed by a viewer comprising: an encoder that encodes the video stream with tags and markers to generate an encoded video stream; a set-top box that receives the encoded video stream and separates the tags and the markers from the encoded video stream to generate an un-encoded video stream; a video database, coupled to the set-top box, that stores the un-encoded video stream and generates a selected video stream; a comparator, coupled to the set-top box, that receives the tags and the markers and viewer preferences/profiles and compares the tags with the viewer preferences/profiles to generate pointers, that point to locations of video segments in the video database, and that select and exclude the video segments from the video database to generate the selected video stream.

The STB may accumulate and process this data upon which to base decisions used to restrict or enhance the displayed content for an individual. For example, a nine-year-old Midwestern male, who likes soccer and comic books and watches four hours of unmonitored TV per day, may have the following experience:

The individual picks up the personalized remote unit and the right thumb presses the power button. This powers up the remote, the TV, the STB with Internet connection, and initiates a thumb print scan on the user. This ID input 250 is recognized by a microprocessor within the STB 252 as "User 1" 254 and the database preferences 264 and profile 274 corresponding to subject "Billy" are accessed. The database information is utilized to produce the appropriate display content. The previous viewing history of the current user and the corresponding time of day tell the STB to, automatically set the TV channel to Cartoon Network. All adult content and pay-per-view channels are locked out. The individual has a maximum of 2 hours watching time before all content is locked out. Suggested programs that might be of interest to the user are subtly displayed in a corner of the screen for easy access. Interactive banners may appear from time to time to entice the user to access enhanced content in areas that might be of interest. Violent or inappropriate content on the Cartoon Network is monitored with the use if iSelect Video and when encountered, the channel automatically changes i.e. to The Disney Channel. At the end of the programmed 2-hour period, the personalized remote, the TV and the STB are automatically powered down and locked out for that user for the rest of the day.

The present invention therefore provides a manner in which a multiple user remote control device or devices can enable a set-top box. The present invention provides an easier and more secure manner of logging onto a set-top box and either restricting or selecting program content based upon user IDs that are sent to the set-top box with command signals. User IDs can be manually inserted or automatically inserted into the remote to control the functionality of the remote. Further, separate remote control devices can be provided for individual users to accomplish the same results.

## Claims

1. A method of controlling displayed video and data content utilizing a remote control device (10, 20, 22, 24) that interacts with a set-top box (16, 34) to provide content based upon the identity of a current user of said remote control (10, 20, 22, 24), the method comprising:
- establishing an identification of said current user by :
▪ receiving recognition data of the current user in the remote control device;
▪ checking in said remote control device whether the recognition data is valid;
▪ if said recognition data is valid, determining and storing a current user ID, related to the received recognition data, in a memory of the remote control device;
▪ if said recognition data is not valid, storing a default user ID in said memory of the remote control device;
- generating by said remote control an output signal (26, 28, 30) combining said user ID and a command sequence to said set-top box (16, 34),
- communicating said output signal to said set-top box (16, 34),
- assigning preference and profile data corresponding to said current user to a current user database(33) within said set-top box (16, 34),
- controlling an output of said set-top box (16, 34) by controlling video content based on said preference and profile data within said current user database (33).

2. The method of claim 1, wherein said identification sequence code (ID) is determined by entering an ID code in a keypad of the remote control device after the log-on button of said remote control device has been activated.

3. The method of claim 1, wherein said identification sequence code (ID) is determined through physical attribute recognition technique selected among a fingerprint scanner, a voice recognition circuit, a retinal scanning device, a snifter device or a device that recognizes faces.

4. The method of claim 2 or 3, wherein it comprises the step of storing said identification of said current user in a memory (63) of the remote control device, and a step of clearing the memory of said identification of said current user when the log-off function is activated.

5. The method of claim 1 wherein in said controlling step the output is an interactive output.

6. The method of claim 1 or 5 wherein said profile data is empirically derived from the usage patterns of said remote control device (10, 20, 22, 24) by said current user.

7. The method of claim 1 or 5 wherein said video content is pretagged to indicate content of the video stream prior to being input into said set-top box (16, 34).

8. The method of claim 1 or 5 wherein said tags are created in real time by video recognition techniques utilizing key words.

9. The method of claim 1 or 5 wherein said tags are created in real time by video recognition techniques utilizing key images.

10. The method of claim 1 or 4 wherein said tags are created in real time by video recognition techniques utilizing key sounds.

11. The method of claims 1 to 5 further comprising:
- controlling an interactive output of said set-top box (16, 34) by controlling video content based on said preference and profile data within said current user database (33), and
- wherein controlling is also handled by comparing tags placed in a video stream that indicate content of said video stream to said preference and profile data.

12. The method of claim 2 wherein the method is to provide selective programming based upon the identity of the current user of said personal remote control (10, 20, 22, 24), and wherein in said step of controlling the output is video output.

13. The method of claim 2 wherein the method is to provide content based upon the identity of the current user of said personal remote control (10, 20, 22, 24), and wherein in said controlling step the output is an interactive output.

14. The method of claim 7 wherein said controlling step also comprises comparing tags that are placed in the video stream that indicate content of said video stream to said preference and profile data.

15. The method of claims 11 to 14 wherein said video content is pretagged to indicate content of the video stream prior to being input into said set-top box (16, 34).

16. The method of claims 11 to 14 wherein said tags are created in real time by video recognition techniques utilizing key words.

17. The method of claim 11 to 14 wherein said tags are created in real time by video recognition techniques utilizing key images.

18. The method of claim 11 to 14 wherein said tags are created in real time by video recognition techniques utilizing key sounds.

19. The method of claim 1 further comprising:
- controlling an output of said set-top box by comparing tags placed in a video stream that indicate content of said video stream to said preference and profile data within said current user database (33).

20. A system for controlling displayed video and data content utilizing a personalized remote control device (10, 20, 22, 24) that interacts with a set-top box (16, 34) to provide content based upon the identity of the current user of said remote control comprising (10, 20, 22, 24):
- an ID input device within said remote (10, 20, 22, 24) to determine the identity of said current user, said remote control device comprising means for checking whether recognition data entered by said ID input device is valid or not and means for determining and storing a user ID, related to the received recognition data, in a memory of the remote control, said user ID depending on whether the recognition data is valid or not;
- a communication link between said personalized remote control (10, 20, 22, 24) and said set-top box (16, 34) for transmission of an output signal combining said user ID and a command sequence to said set-top box (16, 34),
- said set-top box (16, 34) that assigns preference and profile data corresponding to said current user to a current user database (33) within said set-top box (16, 34), and that controls an output by controlling said video content.

21. The system of claim 20 wherein the ID input of said remote control device (10, 20, 22, 24) is a fingerprint scanner, a voice recognition circuit, a retinal scanning device, a snifter device or a device that recognizes faces.

22. The system of claim 20 wherein said ID input device of said remote control device (10, 20, 22, 24) is a keypad used to enter in ID code which determine the identification sequence code (ID).

23. The system of claim 20 wherein said video content is pretagged to indicate content of the video stream.

24. The system of claim 20 wherein said tags are created in real time by video recognition techniques utilizing key words.

25. The system of claim 20 wherein said tags are created in real time by video recognition techniques utilizing key images.

26. The system of claim 20 wherein said tags are created in real time by video recognition techniques utilizing key sounds.

27. The system of claim 20 to 26 wherein the control of the interactive output of said set-top box (16, 34) by controlling said video content is based on comparing tags placed in a video stream that indicate content of said video stream to said preference and profile data within said current user database (33).

28. The system of claim 27 wherein the system provides selective programming based upon the identity of the current user of said personal remote control (10, 20, 22, 24), said set-top box (16, 34) controlling the video output by controlling video content based on said preference and profile data within said current user database (33).

29. The system of claim 27 wherein the system provides content based upon the identity of the current user of said personal remote control (10, 20, 22, 24), the set-top box (16, 34) also assigning preference und profile data corresponding to said current user to a current user database (33) within said set-top box (16, 34) and controls interactive output by controlling said video content based on said preference and profile data within said current user database (33).

30. The system of claim 27 wherein said set-top box (16, 34) further controls said video output by controlling said video content based on comparing tags placed in the video stream that indicate content of said video stream to said preference and profile data within said current user database (33).

31. The system of claim 20 wherein the system provides content based upon the identity of the current user of said personal remote control (10, 20, 22, 24), said set-top box (16, 34) assigning preference and profile data corresponding to said current user to a current user database (33) within said set-top box (16, 34), and controlling interactive output by controlling video content based on said preference and profile data within said current user database (33), and controlling interactive output by controlling said video content based on comparing said tags placed in said video stream that indicate content of said video stream to said preference and profile data within said current user database (33).

32. The system of claim 20 further comprising:
- said set-top box that assigns preference and profile data corresponding to said current user to a current user database within said set-top box, and that controls an interactive output by controlling said video content based on said preference and profile date within said current user database (33), and that controls said interactive output by controlling said video content based on comparing tags placed in a video stream that indicate content of said video stream to said preference and profile data within said current user database (33).

## Patentansprüche

1. Verfahren zum Kontrollieren von angezeigten Video- und Dateninhalten mit einer Fernbedienungsvorrichtung (10, 20, 22, 24), die mit einer Set-Top-Box (16, 34) interagiert, um Inhalte basierend auf der Identität eines aktuellen Benutzers der besagten Fernbedienung (10, 20, 22, 24) anzubieten, wobei das Verfahren folgendes umfasst:
- Festlegung einer Identifizierung von besagtem aktuellen Benutzer durch:
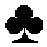 Empfang von Erkennungsdaten des aktuellen Benutzers in der Fernbedienungsvorrichtung;
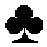 Überprüfen in besagter Fernbedienungsvorrichtung, ob die Erkennungsdaten gültig sind;
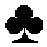 wenn besagte Erkennungsdaten gültig sind, die Bestimmung und Speicherung einer aktuellen Benutzerkennung mit Bezug auf die empfangenen Anerkennungsdaten in einem Speicher der Fernbedienungsvorrichtung;
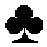 wenn besagte Anerkennungsdaten nicht gültig sind, die Speicherung einer Standard-Benutzerkennung in besagtem Speicher der Fernbedienungsvorrichtung;
- Erzeugung eines Ausgabesignals (26, 28, 30) von besagter Fernbedienung, das besagte Benutzerkennung und eine Befehlssequenz zu besagter Set-Top-Box (16, 34) verbindet,
- Kommunikation des besagten Ausgabesignals an besagte Set-Top-Box (16, 34),
- Zuweisung von Präferenz- und Profildaten entsprechend zu besagtem, aktuellen Benutzer an eine aktuelle Benutzerdatenbank (33) in der Set-top-Box (16, 34),
- Kontrolle einer Ausgabe durch die besagte Set-top-Box (16, 34), indem Videoinhalt auf der Grundlage von besagten Präferenz- und Profildaten in der aktuellen Benutzerdatenbank (33) kontrolliert wird.

2. Verfahren nach Anspruch 1, wobei besagter Identifizierungssequenzcode (ID) bestimmt wird, indem ein ID-Code auf einem Tastenfeld der Fernbedienungsvorrichtung eingegeben wird, nachdem der Verbindungsaufbauknopf auf der Fernbedienungsvorrichtung aktiviert wurde.

3. Verfahren nach Anspruch 1, wobei besagter Identifizierungssequenzcode (ID) durch eine physische Merkmalerkennungstechnologie bestimmt wird, die aus Fingerabdruckscanner, Spracherkennungsschaltkreis, einer Netzhautscannervorrichtung, einer Geruchserkennungsvorrichtung oder einer Gesichtserkennungsvorrichtung gewählt wird.

4. Verfahren nach Anspruch 2 oder 3, das den Schritt der Speicherung und der Identifizierung von besagtem, aktuellen Benutzer in einem Speicher (63) der Fernbedienungsvorrichtung und den Schritt des Löschens der Speicherung der Identifizierung von besagtem, aktuellen Benutzer beinhaltet, wenn die Funktion zum Verbindungsabbau aktiviert wird.

5. Verfahren nach Anspruch 1, wobei in besagtem Kontrollschritt die Ausgabe eine interaktive Ausgabe ist.

6. Verfahren nach Anspruch 1 oder 5, wobei besagte Profildaten empirisch von den Verwendungsmustern der Fernbedienungsvorrichtung (10, 20, 22, 24) von besagtem, aktuellen Benutzer abgeleitet werden.

7. Verfahren nach Anspruch 1 oder 5, wobei besagter Videoinhalt vorgetaggt ist, um den Inhalt des Videostreams anzuzeigen, bevor er in besagte Set-Top-Box (16, 34) eingegeben wird.

8. Verfahren nach Anspruch 1 oder 5, wobei besagte Tags in Echtzeit durch Videoerkennungstechniken erzeugt werden, die Schlüsselwörter verwenden.

9. Verfahren nach Anspruch 1 oder 5, wobei besagte Tags in Echtzeit durch Videoerkennungstechniken erzeugt werden, die Schlüsselbilder verwenden.

10. Verfahren nach Anspruch 1 oder 4, wobei besagte Tags in Echtzeit durch Videoerkennungstechniken erzeugt werden, die Schlüsseltöne verwenden.

11. Verfahren nach Ansprüchen 1 bis 5, das des Weiteren folgendes umfasst:
- Kontrolle einer interaktiven Ausgabe durch die Set-Top-Box (16, 34), indem Videoinhalt auf der Grundlage von besagten Präferenz- und Profildaten in der aktuellen Benutzerdatenbank (33) kontrolliert wird, und
- Durchführen der Kontrolle anhand eines Vergleichs der Tags, die in einem Videostream platziert werden und den Inhalt des Videostreams in den besagten Präferenz- und Profildaten anzeigt.

12. Verfahren nach Anspruch 2, wobei das Verfahren vorsieht, eine selektive Programmierung basierend auf der Identität des aktuellen Benutzers der besagten persönlichen Fernbedienung (10, 20, 22, 24) anzubieten, und wobei in besagtem Kontrollschritt die Ausgabe eine Videoausgabe ist.

13. Verfahren nach Anspruch 2, wobei das Verfahren vorsieht, Inhalt basierend auf der Identität des aktuellen Benutzers der besagten persönlichen Fernbedienung (10, 20, 22, 24) anzubieten, und wobei in besagtem Kontrollschritt die Ausgabe eine interaktive Ausgabe ist.

14. Verfahren nach Anspruch 7, wobei besagter Kontrollschritt auch vergleichende Tags umfasst, die in dem Videostreams platziert sind, um den Inhalt des Videostreams in den besagten Präferenz- und Profildaten anzuzeigen.

15. Verfahren nach Ansprüchen 11 bis 14, wobei besagter Videoinhalt vorgetagged ist, um den Inhalt des Videostreams anzugeben, bevor er in besagte Set-Top-Box (16, 34) eingegeben wird.

16. Verfahren nach Ansprüchen 11 bis 14, wobei besagte Tags in Echtzeit durch Videoerkennungstechniken erzeugt werden, die Schlüsselwörter verwenden.

17. Verfahren nach Ansprüchen 11 bis 14, wobei besagte Tags in Echtzeit durch Videoerkennungstechniken erzeugt werden, die Schlüsselbilder verwenden.

18. Verfahren nach Ansprüchen 11 bis 14, wobei besagte Tags in Echtzeit durch Videoerkennungstechniken erzeugt werden, die Schlüsseltöne verwenden.

19. Verfahren nach Anspruch 1, das des Weiteren Folgendes umfasst:
- Kontrolle einer Ausgabe der besagten Set-Top-Box anhand eines Vergleichs von Tags, die in einem Videostream platziert werden und den Inhalt des besagten Videostreams den besagten Präferenz- und Profildaten in der aktuellen Benutzerdatenbank (33) angeben.

20. System zur Kontrolle von angezeigten Video- und Dateninhalt, das eine personalisierte Fernbedienungsvorrichtung (10, 20, 22, 24) verwendet, die mit einer Set-Top-Box (16, 34) interagiert, um Inhalt basierend auf der Identität des aktuellen Benutzers der Fernbedienung (10, 20, 22, 24) anzuzeigen, das folgendes umfasst:
- ein ID-Eingabegerät in der Fernbedienung (10, 20, 22, 24), um die Identität des aktuellen Benutzers zu bestimmen, wobei besagte Fernbedienungsvorrichtung Mittel zum Kontrollieren umfasst, ob Erkennungsdaten, die von besagtem ID-Eingabegerät eingegeben wurden, gültig sind oder nicht, und Mittel zur Bestimmung und Speicherung einer Benutzerkennung umfasst, die auf die empfangenen Erkennungsdaten bezogen wird, in einem Speicher der Fernbedienung, und besagte Benutzerkennung davon abhängt, ob die Erkennungsdaten gültig sind oder nicht;
- eine Kommunikationsverbindung zwischen besagter, personalisierter Fernbedienung (10, 20, 22, 24) und besagter Set-Top-Box (16, 34) zur Übertragung eines Ausgabesignals, das besagte Benutzerkennung und eine Befehlssequenz zu besagter Set-Top-Box (16, 34) verbindet,
- besagte Set-Top-Box (16, 34), die Präferenz- und Profildaten entsprechend besagtem aktuellen Benutzer einer aktuellen Benutzerdatenbank (33) in der Set-Top-Box (16, 34) zuweist und die eine Ausgabe durch die Kontrolle des besagten Videoinhalts kontrolliert.

21. System nach Anspruch 20, wobei die ID-Eingabe der Fernbedienungsvorrichtung (10, 20, 22, 24) entweder ein Fingerabdruckscanner, ein Spracherkennungsschaltkreis, eine Netzhautscannervorrichtung, eine Gerucherkennungsvorrichtung oder eine Gesichtserkennungsvorrichtung ist.

22. System nach Anspruch 20, wobei besagtes ID-Eingabegerät der Fernbedienungsvorrichtung (10, 20, 22, 24) eine Tastatur ist, die benutzt wird, um einen ID-Code einzugeben, die den Identifizierungssequenzcode (ID) bestimmt.

23. System nach Anspruch 20, wobei besagter Videoinhalt vorgetagged ist, um den Inhalt des Videostreams anzugeben.

24. System nach Anspruch 20, wobei besagte Tags in Echtzeit durch Videoerkennungstechniken erzeugt werden, die Schlüsselwörter verwenden.

25. System nach Anspruch 20, wobei besagte Tags in Echtzeit durch Videoerkennungstechniken erzeugt werden, die Schlüsselbilder verwenden.

26. System nach Anspruch 20, wobei besagte Tags in Echtzeit durch Videoanerkennungstechniken erzeugt werden, die Schlüsseltöne verwenden.

27. System nach Ansprüchen 20 bis 26, wobei die Kontrolle der interaktiven Ausgabe der Set-Top-Box (16, 34) darauf basiert, dass die Kontrolle des besagten Videoinhalts anhand eines Vergleichs der Tags erfolgt, die in einem Videostream platziert werden und den Inhalt des Videostreams den besagten Präferenz- und Profildaten in der aktuellen Benutzerdatenbank (33) angeben.

28. System nach Anspruch 27, wobei das System eine selektive Programmierung basierend auf der Identität des aktuellen Benutzers der persönlichen Fernbedienung (10, 20, 22, 24) bereitstellt und besagte Set-Top-Box (16, 34) die Videoausgabe kontrolliert, indem Videoinhalt auf der Grundlage von besagten Präferenz- und Profildaten in der aktuellen Benutzerdatenbank (33) kontrolliert wird.

29. System nach Anspruch 27, wobei das System Inhalt basierend auf der Identität des aktuellen Benutzers der persönlichen Fernbedienung (10, 20, 22, 24) bereitstellt und die Set-Top-Box (16, 34) auch Präferenz- und Profildaten entsprechend besagtem, aktuellen Benutzer einer aktuellen Benutzerdatenbank (33) in der Set-top-Box (16, 34) zuteilt und die interaktive Ausgabe kontrolliert, indem besagter Videoinhalt auf der Grundlage von besagten Präferenz- und Profildaten in der aktuellen Benutzerdatenbank (33) gesteuert wird.

30. System nach Anspruch 27, wobei besagte Set-Top-Box (16, 34) des Weiteren besagte Videoausgabe kontrolliert, indem besagter Videoinhalt anhand eines Vergleichs von Tags kontrolliert wird, die in dem Videostream platziert werden und den Inhalt des Videostreams an besagte Präferenz- und Profildaten in der aktuellen Benutzerdatenbank (33) übermitteln.

31. System nach Anspruch 20, wobei das System Inhalt basierend auf der Identität des aktuellen Benutzers der persönliche Fernbedienung (10, 20, 22, 24) bereitstellt und besagte Set-Top-Box (16, 34) Präferenz- und Profildaten entsprechend besagtem, aktuellen Benutzer einer aktuellen Benutzerdatenbank (33) in der Set-Top-Box (16, 34) zuteilt, und die interaktive Ausgabe kontrolliert, indem Videoinhalt auf der Grundlage von besagten Präferenz- und Profildaten in der aktuellen Benutzerdatenbank (33) kontrolliert wird, und die interaktive Ausgabe kontrolliert, indem besagter Videoinhalt anhand eines Vergleichs von besagten Tags kontrolliert wird, die in dem Videostream platziert werden und den Inhalt des Videostreams an besagte Präferenz- und Profildaten in der aktuellen Benutzerdatenbank (33) übermitteln.

32. System nach Anspruch 20, das des Weiteren folgendes umfasst:
- besagte Set-Top-Box, die Präferenz- und Profildaten entsprechend besagtem, aktuellen Benutzer einer aktuellen Benutzerdatenbank in der Set-Top-Box zuweist, und die eine interaktive Ausgabe kontrolliert, indem besagter Videoinhalt auf der Grundlage von besagten Präferenz- und Profildaten in der aktuellen Benutzerdatenbank (33) kontrolliert wird, und das besagte, interaktive Ausgabe steuert, indem besagter Videoinhalt anhand eines Vergleichs von besagten Tags kontrolliert wird, die in dem Videostream platziert werden und den Inhalt des Videostreams an besagte Präferenz- und Profildaten in der aktuellen Benutzerdatenbank (33) übermitteln.

## Revendications

1. Méthode de contrôle de contenu vidéo affiché et de données utilisant un dispositif de commande à distance (10, 20, 22, 24) qui interagit avec un boîtier décodeur (16, 34) pour fournir du contenu sur la base de l'identité d'un utilisateur actuel de ladite commande à distance (10, 20, 22, 24), la méthode comprenant :
- l'établissement d'une identification dudit utilisateur actuel par :
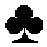 réception de données de reconnaissance de l'utilisateur actuel dans le dispositif de commande à distance ;
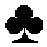 contrôle dans ledit dispositif de commande à distance si les données de reconnaissance sont valides ;
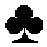 si lesdites données de reconnaissance sont valides, détermination et mémorisation d'un ID d'utilisateur actuel, lié aux données de reconnaissance reçues, dans une mémoire du dispositif de commande à distance ;
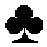 si lesdites données de reconnaissance ne sont pas valides, mémorisation d'un ID d'utilisateur par défaut dans ladite mémoire du dispositif de commande à distance ;
- la génération par ladite commande à distance d'un signal de sortie (26, 28, 30) combinant ledit ID d'utilisateur et une séquence de commande audit boîtier décodeur (16, 34),
- la communication dudit signal de sortie audit boîtier décodeur (16, 34),
- l'attribution de données de préférence et de profil correspondant audit utilisateur actuel à une base de données d'utilisateur actuel (33) dans ledit boîtier décodeur (16, 34),
- le contrôle d'une sortie dudit boîtier décodeur (16, 34) en contrôlant le contenu vidéo sur la base desdites données de préférence et de profil dans ladite base de données d'utilisateur actuel (33).

2. Méthode selon la revendication 1, où ledit code de séquence d'identification (ID) est déterminé en entrant un code ID dans un clavier numérique du dispositif de commande à distance après l'activation du bouton log-on dudit dispositif de commande à distance.

3. Méthode selon la revendication 1, où ledit code de séquence d'identification (ID) est déterminé par une technique de reconnaissance d'attribut physique sélectionnée parmi un scanneur d'empreinte digitale, un circuit de reconnaissance vocale, un dispositif de balayage rétinien, un dispositif snifter ou un dispositif qui reconnaît les visages.

4. Méthode selon la revendication 2 ou 3, où elle comprend l'étape de mémorisation de ladite identification dudit utilisateur actuel dans une mémoire (63) du dispositif de commande à distance, et une étape d'effacement de la mémoire de ladite identification dudit utilisateur actuel quand la fonction log-off est activée.

5. Méthode selon la revendication 1 où dans ladite étape de contrôle la sortie est une sortie interactive.

6. Méthode selon la revendication 1 ou 5 où lesdites données de profil sont empiriquement dérivées des modèles d'usage dudit dispositif de commande à distance (10, 20, 22, 24) par ledit utilisateur actuel.

7. Méthode selon la revendication 1 ou 5 où ledit contenu vidéo est pré-étiqueté pour indiquer le contenu du flux vidéo avant d'être inséré dans ledit boîtier décodeur (16, 34).

8. Méthode selon la revendication 1 ou 5 où lesdites étiquettes sont créées en temps réel par des techniques de reconnaissance vidéo utilisant des mots clés.

9. Méthode selon la revendication 1 ou 5 où lesdites étiquettes sont créées en temps réel par des techniques de reconnaissance vidéo utilisant des images clés.

10. Méthode selon la revendication 1 ou 4 où lesdites étiquettes sont créées en temps réel par des techniques de reconnaissance vidéo utilisant des sons clés.

11. Méthode selon les revendications 1 à 5 comprenant en outre :
- contrôle d'une sortie interactive dudit boîtier décodeur (16, 34) en contrôlant le contenu vidéo sur la base desdites données de préférence et de profil dans ladite base de données d'utilisateur actuel (33), et
- où le contrôle est également gérée en comparant des étiquettes placées dans un flux vidéo qui indiquent le contenu dudit flux vidéo auxdites données de préférence et de profil.

12. Méthode selon la revendication 2 où la méthode consiste à fournir une programmation sélective sur la base de l'identité de l'utilisateur actuel de ladite commande à distance personnelle (10, 20, 22, 24), et où dans ladite étape de contrôle la sortie est une sortie vidéo.

13. Méthode selon la revendication 2 où la méthode consiste à fournir le contenu sur la base de l'identité de l'utilisateur actuel de ladite commande à distance personnelle (10, 20, 22, 24), et où dans ladite étape de contrôle la sortie est une sortie interactive.

14. Méthode selon la revendication 7 où ladite étape de contrôle comprend également la comparaison d'étiquettes qui sont placées dans le flux vidéo qui indiquent le contenu dudit flux vidéo auxdites données de préférence et de profil.

15. Méthode selon les revendications 11 à 14 où ledit contenu vidéo est pré-étiqueté pour indiquer le contenu du flux vidéo avant d'être entré dans ledit boîtier décodeur (16, 34).

16. Méthode selon les revendications 11 à 14 où lesdites étiquettes sont créées en temps réel par des techniques de reconnaissance vidéo utilisant des mots clés.

17. Méthode selon la revendication 11 à 14 où lesdites étiquettes sont créées en temps réel par des techniques de reconnaissance vidéo utilisant des images clés.

18. Méthode selon la revendication 11 à 14 où lesdites étiquettes sont créées en temps réel par des techniques de reconnaissance vidéo utilisant des sons clés.

19. Méthode selon la revendication 1 comprenant en outre :
- contrôle d'une sortie dudit boîtier décodeur en comparant des étiquettes placées dans un flux vidéo qui indiquent le contenu dudit flux vidéo auxdites données de préférence et de profil dans ladite base de données d'utilisateur actuel (33).

20. Système de contrôle de contenu vidéo affiché et de données utilisant un dispositif de commande à distance (10, 20, 22, 24) personnalisé qui interagit avec un boîtier décodeur (16, 34) pour fournir du contenu sur la base de l'identité de l'utilisateur actuel de ladite commande à distance (10, 20, 22, 24) comprenant :
- un dispositif d'entrée ID dans ladite commande à distance (10, 20, 22, 24) pour déterminer l'identité dudit utilisateur actuel, ledit dispositif de commande à distance comprenant des moyens pour vérifier si les données de reconnaissance entrées par ledit dispositif d'entrée ID sont valides ou non et des moyens pour déterminer et mémoriser un ID d'utilisateur, lié aux données de reconnaissance reçues, dans une mémoire de la commande à distance, ledit ID d'utilisateur étant en fonction du fait si les données de reconnaissance sont valides ou non ;
- un lien de communication entre ladite commande à distance (10, 20, 22,24) personnalisée et ledit boîtier décodeur (16, 34) pour la transmission d'un signal de sortie combinant ledit ID d'utilisateur et une séquence de commande audit boîtier décodeur (16, 34),
- ledit boîtier décodeur (16, 34) qui attribue les données de préférence et de profil correspondant audit utilisateur actuel à une base de données d'utilisateur actuel (33) dans ledit boîtier décodeur (16, 34), et qui contrôle une sortie en contrôlant ledit contenu vidéo.

21. Système selon la revendication 20 où l'entrée ID dudit dispositif de commande à distance (10, 20, 22, 24) est un scanneur d'empreinte digitale, un circuit de reconnaissance vocale, un dispositif de balayage rétinien, un dispositif snifter ou un dispositif qui reconnaît les visages.

22. Système selon la revendication 20 où ledit dispositif d'entrée ID dudit dispositif de commande à distance (10, 20, 22, 24) est un clavier numérique utilisé pour entrer un code ID qui détermine le code de séquence d'identification (ID).

23. Système selon la revendication 20 où ledit contenu vidéo est pré-étiqueté pour indiquer le contenu du flux vidéo.

24. Système selon la revendication 20 où lesdites étiquettes sont créées en temps réel par des techniques de reconnaissance vidéo utilisant des mots clés.

25. Système selon la revendication 20 où lesdites étiquettes sont créées en temps réel par des techniques de reconnaissance vidéo utilisant des images clés.

26. Système selon la revendication 20 où lesdites étiquettes sont créées en temps réel par des techniques de reconnaissance vidéo utilisant des sons clés.

27. Système selon la revendication 20 à 26 où le contrôle de la sortie interactive dudit boîtier décodeur (16, 34) en contrôlant ledit contenu vidéo est basé sur la comparaison d'étiquettes placées dans un flux vidéo qui indiquent le contenu dudit flux vidéo auxdites données de préférence et de profil dans ladite base de données d'utilisateur actuel (33).

28. Système selon la revendication 27 où le système fournit une programmation sélective sur la base de l'identité de l'utilisateur actuel de ladite commande à distance (10, 20, 22, 24) personnelle, ledit boîtier décodeur (16, 34) contrôlant la sortie vidéo en contrôlant le contenu vidéo sur la base desdites données de préférence et de profil dans ladite base de données d'utilisateur actuel (33).

29. Système selon la revendication 27 où le système fournit le contenu sur la base de l'identité de l'utilisateur actuel de ladite commande à distance (10, 20, 22, 24) personnelle, le boîtier décodeur (16, 34) attribuant également des données de préférence et de profil correspondant audit utilisateur actuel à une base de données d'utilisateur actuel (33) dans ledit boîtier décodeur (16, 34) et contrôle la sortie interactive en contrôlant ledit contenu vidéo sur la base desdites données de préférence et de profil dans ladite base de données d'utilisateur actuel (33).

30. Système selon la revendication 27 où ledit boîtier décodeur (16, 34) contrôle en outre ladite sortie vidéo en contrôlant ledit contenu vidéo sur la base de la comparaison des étiquettes placées dans le flux vidéo qui indiquent le contenu dudit flux vidéo auxdites données de préférence et de profil dans ladite base de données d'utilisateur actuel (33).

31. Système selon la revendication 20 où le système fournit le contenu sur la base de l'identité de l'utilisateur actuel de ladite commande à distance (10, 20, 22, 24) personnelle, ledit boîtier décodeur (16, 34) attribuant des données de préférence et de profil correspondant audit utilisateur actuel à une base de données d'utilisateur actuel (33) dans ledit boîtier décodeur (16, 34), et contrôlant la sortie interactive en contrôlant le contenu vidéo sur la base desdites données de préférence et de profil dans ladite base de données d'utilisateur actuel (33), et contrôlant la sortie interactive en contrôlant ledit contenu vidéo sur la base de la comparaison desdites étiquettes placées dans ledit flux vidéo qui indiquent le contenu dudit flux vidéo auxdites données de préférence et de profil dans ladite base de données d'utilisateur actuel (33).

32. Système selon la revendication 20 comprenant en outre :
- ledit boîtier décodeur qui attribue des données de préférence et de profil correspondant audit utilisateur actuel à une base de données d'utilisateur actuel dans ledit boîtier décodeur, et qui contrôle une sortie interactive en contrôlant ledit contenu vidéo sur la base desdites données de préférence et de profil dans ladite base de données d'utilisateur actuel (33), et qui contrôle ladite sortie interactive en contrôlant ledit contenu vidéo sur la base de la comparaison des étiquettes placées dans un flux vidéo qui indiquent le contenu dudit flux vidéo auxdites données de préférence et de profil dans ladite base de données d'utilisateur actuel (33).
